# FASCICULE DE BREVET EUROPEEN

(11) **EP 3 430 243 B1**
(45) Date de publication et mention de la délivrance du brevet: **06.01.2021**
(21) Numéro de dépôt: 17714871.5
(22) Date de dépôt: 15.03.2017
(51) Int. Cl.: F01D 25/20, F02K 3/06, F02C 7/36

(54) **TURBORÉACTEUR AYANT UN GROUPE LUBRIFICATION DES PALIERS SIMPLIFIÉ**
TURBOSTRAHLTRIEBWERK MIT EINER VEREINFACHTEN LAGERSCHMIERUNGSANORDNUNG
TURBOJET ENGINE COMPRISING A SIMPLIFIED BEARING LUBRICATION ASSEMBLY

(30) Priorité: 15.03.2016 FR 1652170
(43) Date de publication de la demande: 23.01.2019
(73) Titulaire: Safran Aircraft Engines, 75015 Paris (FR)
(72) Inventeur: CUVILLIER, Romain, Guillaume, 77550 Moissy-Cramayel (FR); BORDONI, Nils, Edouard, Romain, 77550 Moissy-Cramayel (FR); BRAULT, Michel Gilbert Roland, 77550 Moissy-Cramayel (FR); CHALAUD, Sébastien Christophe, 77550 Moissy-Cramayel (FR); KUBIAK, Guillaume Patrice, 77550 Moissy-Cramayel (FR); NEGRI, Arnaud, Nicolas, 77550 Moissy-Cramayel (FR); NOWAKOWSKI, Nathalie, 77550 Moissy-Cramayel (FR)
(74) Mandataire: Regimbeau
(86) Numéro de dépôt international: PCT/FR2017/050600
(87) Numéro de publication internationale: WO 2017/158298

(56) Documents cités:
- EP-A1- 0 513 957
- FR-A1- 2 925 110
- FR-A1- 2 977 277
- US-A1- 2015 343 346
- US-A1- 2015 369 128

## Description

### DOMAINE DE L'INVENTION

L'invention concerne le domaine général des turbomachines à double flux, et plus particulièrement des turbomachines ayant un taux de dilution élevé.

### ARRIERE-PLAN TECHNOLOGIQUE

Un turboréacteur à double flux comprend généralement, d'amont en aval dans le sens de l'écoulement des gaz, une soufflante carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression, lesdits arbres étant fixés aux parties structurales du turboréacteur par l'intermédiaire de paliers.

Afin d'améliorer le rendement propulsif du turboréacteur et de réduire sa consommation spécifique ainsi que le bruit émis par la soufflante, il a été proposé des turboréacteurs présentant un taux de dilution (« bypass ratio » en anglais, qui correspond au rapport entre le débit du flux secondaire (froid) et le débit du flux primaire (chaud, qui traverse le corps primaire)) élevé.

Pour atteindre de tels taux de dilution, la soufflante est découplée de la turbine basse pression, permettant ainsi d'optimiser indépendamment leur vitesse de rotation respective. Par exemple, le découplage peut être réalisé à l'aide d'un réducteur tel qu'un mécanisme de réduction épicycloïdal (« star gear reduction mecanism » en anglais) ou planétaire (« planetary gear reduction mecanism » en anglais), placé entre l'extrémité amont (par rapport au sens d'écoulement des gaz dans le turboréacteur) de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet de réduire la vitesse de rotation et le rapport de pression de la soufflante (« fan pressure ratio » en anglais), et d'augmenter la puissance extraite par la turbine basse pression. Grâce au mécanisme de réduction, l'arbre basse pression peut en effet tourner à des vitesses de rotation plus élevées que dans les turboréacteurs conventionnels.

L'arbre haute pression est fixé aux parties structurales du moteur par l'intermédiaire d'un palier avant HP#1 et d'un palier arrière HP#2. Le palier avant HP#1 est habituellement monté sur l'arbre haute pression et sur le carter qui relie le compresseur basse pression et le compresseur haute pression (carter inter-compresseur). Le palier arrière HP#2 est quant à lui monté d'une part sur l'arbre haute pression et d'autre part sur et le carter inter-turbine (c'est-à-dire sur le carter s'étendant entre le carter logeant la turbine haute pression et le carter logeant la turbine basse pression).

Un troisième palier haute pression peut le cas échéant être prévu entre le palier avant HP#1 et le palier arrière HP#2. Le troisième palier haute avant s'étend de préférence en amont d'une chambre de combustion du turboréacteur 1.

L'arbre basse pression est généralement supporté par trois paliers BP#1, BP#2 et BP#3. Le premier palier BP#1 est situé le plus en amont de l'arbre basse pression et peut être monté d'une part sur l'arbre basse pression et d'autre part entre le mécanisme de réduction et le booster 3 (sur le carter d' « entrée »). Le palier troisième BP#3, qui est situé le plus en aval de l'arbre basse pression, peut être monté sur l'arbre basse pression et sur le carter d'échappement du turboréacteur. La position des paliers BP#1 et BP#3 étant conventionnelle, elle ne sera pas davantage détaillée dans ce qui suit.

Le deuxième palier BP#2, qui est adjacent au palier troisième BP#3, peut être monté sur l'arbre basse pression et sur le carter inter-turbine, en amont de la turbine basse pression ou sur le carter d'échappement comme le palier BP#3. Dans une forme de réalisation, le deuxième palier BP#2 s'étend en aval du palier arrière HP#2.

L'arbre de la soufflante, qui est monté entre la sortie du mécanisme de réduction et le rotor de la soufflante, est en outre supporté par un palier amont S#1 disposé sous la soufflante et un palier aval S#2 disposé au niveau de l'entrée de l'espace d'écoulement secondaire, en amont du mécanisme de réduction.

Le turboréacteur comprend en outre un engrenage configuré pour prélever la puissance sur l'arbre haute pression. Cet engrenage est généralement placé en amont du palier avant HP#1.

Ces différents paliers, le mécanisme de réduction et l'engrenage doivent être lubrifiés et refroidis. A cet effet, le turboréacteur comprend généralement un groupe de lubrification alimentant un circuit d'huile fermé, des enceintes dans lesquelles sont logés les paliers, le mécanisme de réduction et l'engrenage, des gicleurs configurés pour injecter de l'huile dans les enceintes et des pompes de récupération configurées pour recycler l'huile qui a été injectée dans les enceintes.

Chaque enceinte comprend à cet effet des roulements interposés entre une bague interne et une bague externe coaxiales avec l'axe X du turboréacteur et sensiblement annulaires. La bague externe peut être fixe par rapport aux éléments structuraux du turboréacteur tandis que la bague interne est fixée sur des pièces tournantes du turboréacteur et donc mobile en rotation autour de son axe X. En variante, les deux bagues sont tournantes. Les équipements logés dans les enceintes sont lubrifiés et refroidis par de l'huile qui est projetée dans l'enceinte par les gicleurs afin de former un brouillard de gouttelettes en suspension. Des moyens d'étanchéité sont prévus dans les zones où les bagues se rejoignent afin de permettre le passage d'un flux d'air dans le but de pressuriser l'enceinte et de retenir au maximum l'huile à l'intérieur de celle-ci. On prévoit par ailleurs une pompe de récupération d'huile pour évacuer un volume d'huile équivalent à celui qu'on injecte dans l'enceinte via les gicleurs.

Une telle configuration permet ainsi de lubrifier et de refroidir efficacement ces équipements. Toutefois, les enceintes et les pompes de récupération ont un impact non négligeable sur l'encombrement et le poids du moteur, augmentant ainsi la consommation spécifique du turboréacteur.

Le document US 2015/343346 décrit un turboréacteur conforme au préambule de la revendication 1.

Le document US 2015/369128 décrit une pompe de récupération pour un système de lubrification d'une turbomachine.

### RESUME DE L'INVENTION

Un objectif de l'invention est donc de proposer un turboréacteur à double flux qui présente une masse réduite en comparaison avec les turboréacteurs à double flux conventionnels tout en assurant une lubrification et un refroidissement optimaux de ses équipements tels que ses paliers et le cas échéant son mécanisme de réduction et en évitant les risques de rétention d'huile.

Pour cela, l'invention propose un turboréacteur à double flux comprenant :
- un arbre basse pression supporté par au moins deux paliers basse pression,
- un arbre haute pression supporté par au moins deux paliers haute pression,
- un arbre de soufflante supporté par au moins deux paliers de soufflante,
- un mécanisme de réduction, couplant l'arbre basse pression et l'arbre de soufflante,
- des enceintes logeant les paliers basse pression, les paliers haute pression, les paliers de soufflante et le mécanisme de réduction, et
- un groupe de lubrification comprenant un circuit d'huile fermé configuré pour alimenter les enceintes en huile afin de refroidir lesdits paliers et le mécanisme de réduction, ledit groupe de lubrification comprenant au plus cinq pompes de récupération configurées pour récupérer l'huile dans les enceintes. Selon l'invention, le turboréacteur est caractérisé en ce que les paliers haute pression comprennent deux paliers haute pression avant, placés en amont d'une chambre de combustion, et un palier haute pression arrière, placé en aval de la chambre de combustion, les paliers haute pression avant étant logés dans une même enceinte et associés à une même pompe de récupération.

Certaines caractéristiques préférées mais non limitatives du turboréacteur décrit ci-dessus sont les suivantes, prises individuellement ou en combinaison :
- le turboréacteur comprend au plus quatre pompes de récupération configurées pour récupérer l'huile dans les enceintes,
- le turboréacteur comprend au plus autant de pompes de récupération que d'enceintes, chaque pompe de récupération étant associée à au plus une enceinte respective,
- les paliers de soufflante, le mécanisme de réduction et au moins un des paliers basse pression sont logés dans une même enceinte, et dans lequel une unique pompe de récupération est configurée pour récupérer l'huile injectée dans ladite enceinte,
- les autres paliers basse pression, les paliers haute pression et les paliers de soufflante sont logés dans au plus quatre enceintes, et dans lequel le groupe de lubrification comprend exactement trois ou quatre pompes de récupération configurées pour récupérer l'huile injectée dans lesdites quatre enceintes,
- une seule des pompes de récupération du groupe de lubrification est configurée pour récupérer l'huile dans la ou les enceintes logeant les paliers de soufflante, le mécanisme de réduction et l'un des palier basse pression.
- les paliers haute pression comprennent un palier haute pression avant et un palier haute pression arrière, les paliers basse pression comprennent un palier basse pression avant et un palier basse pression arrière, le groupe de lubrification comprenant une pompe de récupération configurée pour récupérer l'huile dans l'enceinte logeant le palier haute pression arrière et une pompe de récupération configurée pour récupérer l'huile dans l'enceinte logeant le palier basse pression arrière. Optionnellement, le groupe de lubrification comprend une pompe de récupération configurée pour récupérer l'huile dans l'enceinte logeant le palier haute pression avant et une pompe de récupération configurée pour récupérer l'huile dans l'enceinte logeant le mécanisme de réduction,
- les paliers haute pression comprennent un palier haute pression avant et un palier haute pression arrière, les paliers basse pression comprennent un palier basse pression avant et un palier basse pression arrière, une seule des pompes de récupération du groupe de lubrification étant configurée pour récupérer l'huile dans la ou les enceintes logeant le palier haute pression arrière et le palier basse pression arrière, Optionnellement, le groupe de lubrification comprend une pompe de récupération configurée pour récupérer l'huile dans l'enceinte logeant le palier haute pression avant et une pompe de récupération configurée pour récupérer l'huile dans l'enceinte logeant le mécanisme de réduction.
- l'arbre basse pression est supporté par au moins trois paliers basse pression, un premier et un deuxième desdits paliers basse pression étant positionnés entre les paliers de soufflante et les paliers haute pression,
- soit une seule pompe de récupération du groupe de récupération est configuré pour récupérer l'huile dans la ou les enceintes logeant le mécanisme de réduction et le deuxième palier basse pression, soit une seule pompe de récupération du groupe de récupération est configuré pour récupérer l'huile dans la ou les enceintes logeant l'un des paliers haute pression et le deuxième palier basse pression,
- l'arbre basse pression est supporté par quatre paliers basse pression, un premier et un deuxième des paliers basse pression étant positionnés entre les paliers de soufflante et les paliers haute pression tandis qu'un troisième et un quatrième des paliers basse pression sont positionnés en aval des paliers haute pression, l'amont et l'aval étant défini suivant un sens d'écoulement des gaz dans le turboréacteur. Optionnellement, exactement trois pompes de récupération du groupe de lubrification sont configurées pour récupérer l'huile dans les enceintes logeant respectivement le troisième palier basse pression, le quatrième palier basse pression et les paliers haute pression,
- les paliers haute pression comprennent un palier haute pression avant et un palier haute pression arrière, les paliers basse pression comprennent un premier, un deuxième et un troisième palier basse pression, et dans lequel l'enceinte du palier haute pression arrière, l'enceinte du troisième palier basse pression et l'enceinte du quatrième palier basse pression sont non ventilées,
- les paliers basse pression comprennent exactement trois ou quatre paliers basse pression, dont un ou deux paliers basse pression placés en amont d'une chambre de combustion, et un ou deux paliers basse pression placés en aval de la chambre de combustion,
- le turboréacteur présente un taux de dilution supérieur ou égal à 10, de préférence supérieur ou égal à 18, par exemple entre 12 et 18, et/ou
- le mécanisme de réduction comprend un mécanisme de réduction épicycloïdal ou planétaire présentant un rapport de réduction compris entre 2.6 et 5.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
Les figures 1a à 3i sont des vues schématiques et en coupe de modes de réalisation d'un turboréacteur conformes à l'invention, et

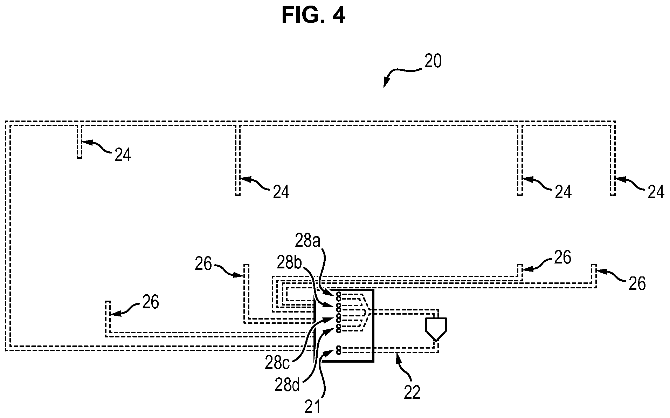

La figure 4 est une vue schématique illustrant un exemple de réalisation d'un groupe de lubrification pouvant être mis en œuvre dans un turboréacteur conforme à l'invention, et notamment dans les modes de réalisation dans lesquels le groupe de lubrification comprend exactement quatre pompes de récupération.

### DESCRIPTION DETAILLEE D'UN MODE DE REALISATION

Dans ce qui suit, un turboréacteur va à présent être décrit en référence aux figures annexées.

Le turboréacteur 1 comprend, de manière conventionnelle, une soufflante 2 et un corps primaire. Le corps primaire comprend, dans le sens d'écoulement des gaz, un compresseur basse pression 3 (booster), un compresseur haute pression 4, une chambre de combustion 5, une turbine haute pression 6, une turbine basse pression 7, et une tuyère d'échappement 8 des gaz.

La soufflante 2 comprend un disque de soufflante pourvu d'aubes de soufflante à sa périphérie qui, lorsqu'elles sont mises en rotation, entraînent le flux d'air dans les espaces d'écoulement primaire et secondaire du turboréacteur 1. Le disque de soufflante est entrainé en rotation par un arbre basse pression 6a de la turbine basse pression 7.

Dans une forme de réalisation, le turboréacteur 1 présente un taux de dilution élevé. Par taux de dilution élevé, on comprendra ici un taux de dilution supérieur à 10, par exemple compris entre 12 et 18. Pour cela, la soufflante 2 est découplée de la turbine basse pression 7 pour optimiser indépendamment leur vitesse de rotation respective, par exemple à l'aide d'un réducteur du type épicycloïdal ou planétaire, placé entre l'extrémité amont (par rapport au sens d'écoulement des gaz dans le turboréacteur 1) de l'arbre basse pression 6a et la soufflante 2.

La soufflante 2 est alors entrainée par l'arbre basse pression 6a par l'intermédiaire du mécanisme de réduction 10 et d'un arbre de soufflante 2a, qui est fixé entre le mécanisme de réduction 10 et le disque de la soufflante 2.

Pour calculer le taux de dilution, le débit du flux secondaire et le débit du flux primaire sont mesurés lorsque le turboréacteur 1 est stationnaire dans une atmosphère standard (telle que définie par le manuel de l'Organisation de l'aviation civile internationale (OACI), Doc 7488/3, 3e édition) et au niveau de la mer.

Dans une forme de réalisation, le mécanisme de réduction 10 comprend un mécanisme de réduction 10 épicycloïdal ou planétaire.

Le rapport de réduction du mécanisme de réduction 10 est de préférence compris entre 2.6 et 5.

Le diamètre de la soufflante 2 peut être compris entre quatre-vingt pouces (203.2 centimètres) et cent-dix pouces (279,4 centimètres), de préférence entre quatre-vingt pouces (203.2 centimètres) et quatre-vingt-dix pouces (228.6 centimètres).

L'arbre de soufflante 2a, l'arbre haute pression 7a et l'arbre basse pression 6a sont centrés sur l'axe X du turboréacteur 1 par une série de paliers.

Dans le cas d'espèce, l'arbre de soufflante 2a est supporté par le palier amont S#1 et le palier aval S#2, l'arbre haute pression 7a est supporté par le palier avant HP#1, le palier arrière HP#2 et le cas échéant un troisième palier haute pression, tandis que l'arbre basse pression 6a est supporté par les trois paliers BP#1, BP#2 et BP#3. Ces sept voire huit paliers étant conventionnels et ayant été décrits précédemment, ils ne seront pas davantage détaillés ici.

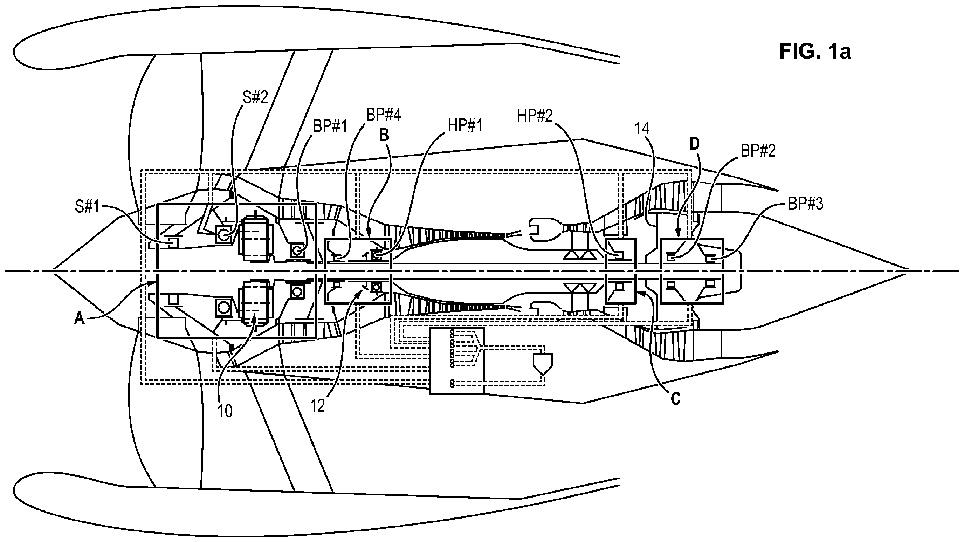

Dans une forme de réalisation illustrée sur les figures 1a à 2f, l'arbre basse pression 6a peut également être supporté par un quatrième palier BP#4, placé entre le premier palier BP#1, qui est le palier le plus en amont de l'arbre basse pression 6a, et le palier avant HP#1 de l'arbre haute pression 7a. Ce quatrième palier BP#4 peut notamment être monté sur l'arbre basse pression 6a et sur le carter inter-compresseur, soit entre le carter logeant le booster 3 et le carter logeant le compresseur haute pression 4.

Le montage de l'arbre basse pression 6a sur quatre paliers BP#1 à BP#4 permet de déplacer de manière efficace les modes de déplacement de l'arbre basse pression 6a, qui est supercritique (c'est-à-dire avec un mode de flexion dans la plage de fonctionnement) afin de positionner les modes de flexion en régime transitoire du turboréacteur 1 avec des marges de sécurité par rapport aux régimes stabilisés. Par régime stabilisé, on comprendra ici un régime défini par un spectre de vitesses de rotation de l'arbre basse pression 6a dans lequel le turboréacteur 1 peut être placé et maintenu pendant un temps relativement long (compris entre quelques minutes et plusieurs heures). Des exemples de régimes stabilisés comprennent notamment le ralenti au sol (« idle » en anglais), le ralenti en vol, la croisière (« cruise » en anglais,) ou encore le décollage. Par régime transitoire, on comprendra ici un régime correspondant au passage d'un régime stabilisé à un autre dans lequel la vitesse de rotation de l'arbre basse pression 6a varie rapidement. En effet, les régimes stabilisés ne couvrent pas l'ensemble du spectre entre le ralenti et la redline (terme anglais désignant la vitesse maximale absolue rencontrée par l'arbre basse pression 6a durant tout le vol), de sorte qu'il peut être nécessaire, selon le régime stabilisé à atteindre, de passer par un régime transitoire pour atteindre ce régime stabilisé.

Ainsi, grâce à l'ajout du palier basse pression BP#4, le premier mode de flexion de l'arbre basse pression 6a est déplacé à environ 8000 tr/min, soit entre le régime de ralenti au sol (qui correspond à une vitesse de rotation de l'arbre basse pression 6a de 2000 à 4500 tours par minute (tr/min)) et le régime de croisière (qui correspond à une vitesse de rotation de l'arbre basse pression 6a de 8500 à 9500 tr/min), pour un turboréacteur 1 ayant une redline comprise entre 10 000 tr/min et 12 000 tr/min.

Il devient en outre possible de réduire le diamètre de l'arbre basse pression 6a et donc l'encombrement du corps primaire pour atteindre, avec le mécanisme de réduction 10 et le diamètre important de la soufflante 2, un taux de dilution élevé pour le turboréacteur 1. Typiquement, l'arbre basse pression 6a peut présenter un diamètre externe inférieur à cinquante millimètres, par exemple inférieur à quarante-cinq millimètres.

Ce positionnement des paliers permet également de réduire les consommations de jeux (déplacement radial) du booster 3, celui-ci étant à présent placé entre deux paliers BP#1 et BP#4.

Le turboréacteur 1 comprend en outre généralement un engrenage 12 configuré pour prélever la puissance sur l'arbre haute pression. Ici, il s'agit d'un engrenage par roue conique connecté à un arbre radial. Cet engrenage est généralement placé en amont du palier avant HP#1.

Le turboréacteur 1 comprend un groupe de lubrification 20 comportant, de manière classique en soi, un réservoir 22 logeant de l'huile qui est maintenue, par des systèmes connus d'échangeurs, à une température suffisamment basse pour permettre le refroidissement des paliers et du mécanisme de réduction 10. Le groupe de lubrification 20 comprend une pompe de circulation d'huile 21 et des canalisations d'amenée de l'huile respectivement dans les enceintes A à D, où l'huile est injectée sur les pièces à refroidir par l'intermédiaire d'un ou plusieurs gicleurs 24. Des canalisations de récupération 26 en sortie des enceintes A à D assurent le recueil du brouillard d'huile grâce à des pompes de récupération 28a à 28d. Le brouillard récupéré sur les différentes enceintes A à D débouche dans le réservoir qui comporte un déshuileur.

Les gicleurs 24 peuvent être placés en partie haute des enceintes A à D (le bas et le haut étant définis par rapport à la position occupée en vol normal du turboréacteur 1), au droit des paliers associés. Les canalisations de récupération 26 quant à elles sont positionnées en bas des enceintes A à D de manière à récupérer l'huile par dépression.

Dans une forme de réalisation, le groupe de lubrification 20 du turboréacteur 1 comprend au plus cinq pompes de récupération 28a à28d, de préférence au plus quatre pompes de récupération 28a à 28d, configurées pour recycler l'huile qui a été injectée dans les enceintes A à E. Plus précisément, le groupe de lubrification 20 comprend exactement trois, quatre ou cinq pompes de récupération 28a à 28d. Les pompes de récupération 28a à 28d peuvent par exemple être logées dans le corps du turboréacteur 1 avec le réservoir 22, entre le carter externe logeant le corps primaire et la plateforme définissant la surface interne de la veine secondaire.

De même, le turboréacteur 1 comprend au plus cinq enceintes A à E, configurées pour contenir l'huile introduite par les gicleurs 24 afin de lubrifier et refroidir l'ensemble des paliers et le mécanisme de réduction 10. Plus précisément, le turboréacteur 1 comprend une enceinte A à E par pompe de récupération 28a à 28d.

A cet effet, les deux paliers de soufflante S#1 et S#2 et le mécanisme de réduction 10, et de manière optionnelle le palier basse pression BP#1, peuvent être logés dans une même enceinte A. Une pompe de récupération 28a est alors associée à cette enceinte A. Les autres paliers peuvent être logés dans des enceintes dédiées ou au contraire dans plusieurs enceintes communes, afin de réduire le nombre d'enceintes nécessaires. On notera que pour ces autres paliers, un maximum d'une pompe de récupération d'huile par enceinte est nécessaire. Typiquement, une même pompe de récupération peut être utilisée pour deux enceintes, voire trois enceintes.

Le nombre de pompes de récupération 28a-28d et d'enceintes A à E est donc fortement réduit en comparaison avec l'art antérieur, qui place chaque équipement (paliers S#1, S#2, HP#1, HP#2, BP#1 à BP#4 ou mécanisme de réduction 10) dans une enceinte avec une pompe de récupération dédiée. Le circuit de lubrification est donc fortement simplifié grâce à la réduction du nombre de pompes de récupération. On réduit en outre très fortement la masse du turboréacteur 1, ainsi que l'encombrement radial et l'encombrement axial résultant de la présence des pompes de récupération 28a à 28d et des enceintes A à E.

Chaque enceinte A à E comprend à cet effet une bague interne et une bague externe coaxiales avec l'axe X du turboréacteur 1 et sensiblement annulaires. La bague externe est fixe par rapport aux éléments structuraux du turboréacteur 1 tandis que la bague interne est fixée sur des pièces tournantes du turboréacteur 1 et donc mobile en rotation autour de son axe X. Lorsque l'enceinte loge un palier, le support dudit palier est donc fixé sur la bague externe de l'enceinte.

Dans les exemples de réalisation illustrés sur les figures 1a à 2f, le turboréacteur 1 comprend deux paliers de soufflante S#1 et S#2, un mécanisme de réduction 10, deux paliers haute pression HP#1 et HP#2 et quatre paliers basse pression BP#1, BP#2, BP#3 et BP#4.

Le groupe de lubrification 20 peut alors comprendre exactement trois ou quatre pompes de récupération 28a à 28d. Chacune des pompes de récupération 28a à 28d est de préférence associée à une enceinte A à D, les paliers (S#1, S#2, BP#1 à BP#4, HP#1 et HP#2) et le mécanisme de réduction 10 étant répartis comme suit dans ces trois ou quatre enceintes A à D.

Dans l'exemple de réalisation illustré sur la figure 1a, le turboréacteur 1 comprend au plus quatre pompes de récupération 28a à 28d, chaque pompe de récupération étant associée à une enceinte A à D, à savoir :
- une enceinte A logeant les deux paliers de soufflante S#1 et S#2, le mécanisme de réduction 10 et le palier basse pression BP#1,
- une enceinte B logeant le palier basse pression BP#4 et le palier haute pression avant HP#1.
- une enceinte C logeant le palier haute pression arrière HP#2.
- une enceinte D logeant les paliers basse pression BP#2 et BP#3.

Dans cet exemple de réalisation, le groupe de lubrification 20 comprend donc :
- une pompe de récupération 28a configurée pour récupérer l'huile dans l'enceinte A qui loge les deux paliers de soufflante S#1 et S#2, le mécanisme de réduction 10 et le palier basse pression BP#1,
- une pompe de récupération 28b configurée pour récupérer l'huile dans l'enceinte B qui loge le palier basse pression BP#4 et le palier haute pression avant HP#1,
- une pompe de récupération 28c configurée pour récupérer l'huile dans l'enceinte C qui loge le palier haute pression arrière HP#2, et
- une pompe de récupération 28d configurée pour récupérer l'huile dans l'enceinte D qui loge les paliers basse pression BP#2 et BP#3.

En variante, le turboréacteur 1 pourrait comprendre exactement trois pompes de récupération, la pompe de récupération 28c étant alors configurée pour récupérer l'huile dans l'enceinte C qui loge le palier haute pression arrière HP#2 et dans l'enceinte D qui loge les paliers basse pression BP#2 et BP#3. Dans ce cas, la pompe de récupération 28d est supprimée.

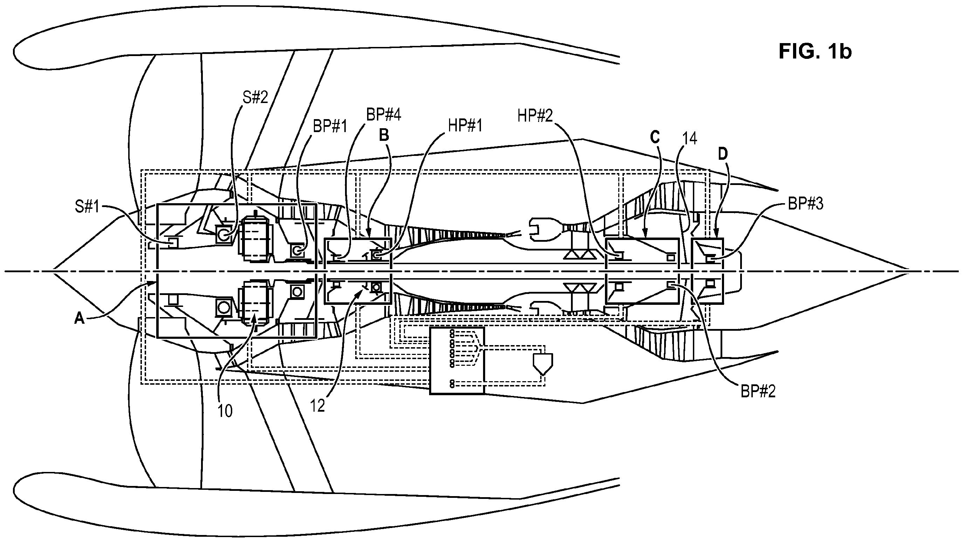

L'exemple de réalisation illustré en figure 1b est identique à celui illustré en figure 1a, excepté que le palier basse pression BP#2 est placé dans l'enceinte C. Comme pour la figure 1a, une même pompe de récupération 28c peut alors être utilisée pour récupérer l'huile dans les enceintes C et D, le turboréacteur 1 ne comprenant alors que trois pompes de récupération 28a à 28c.

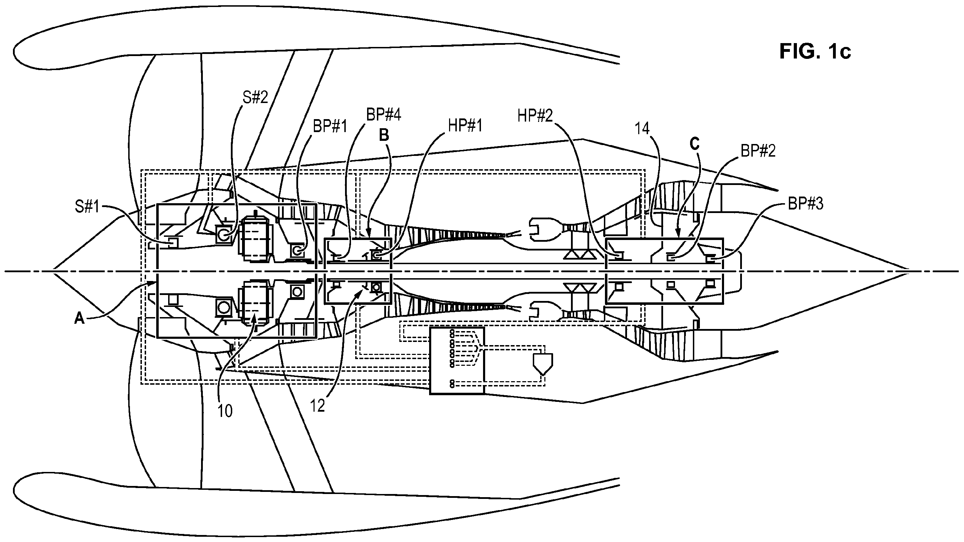

L'exemple de réalisation illustré en figure 1c est identique à celui illustré en figure 1a, excepté que le turboréacteur 1 ne comprend que les enceintes A, B et C, l'enceinte C logeant le palier haute pression arrière HP#2 et les paliers basse pression BP#2 et BP#3. Dans cet exemple de réalisation, le turboréacteur 1 comprend donc trois pompes de récupération 28a, 28b et 28c exactement, à savoir une pompe de récupération 28a à 28c par enceinte A à C (respectivement).

Dans un exemple de réalisation non illustré sur les figures, le turboréacteur 1 comprend cinq enceintes. Une première enceinte A loge les deux paliers de soufflante S#1 et S#2, le mécanisme de réduction 10 et le palier basse pression BP#1. Une deuxième enceinte B loge le palier basse pression BP#4 et le palier haute pression avant HP#1. Une troisième, une quatrième et une cinquième enceinte logent respectivement le palier haute pression arrière HP#2, le deuxième palier basse pression BP#2 et le troisième palier basse pression BP#3. Dans ce cas, le turboréacteur 1 comprend au plus cinq pompes de récupération (à savoir au plus une pompe par enceinte). Ainsi, le turboréacteur 1 peut comprendre une pompe de récupération pour la première enceinte, une pompe de récupération pour la deuxième enceinte, et entre une et trois pompes de récupération pour la troisième, la quatrième et la cinquième enceinte.

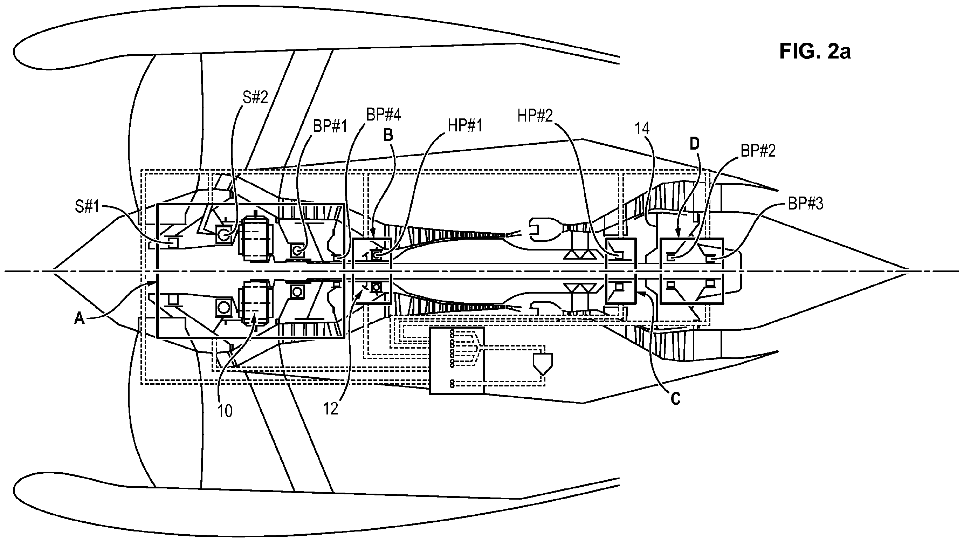

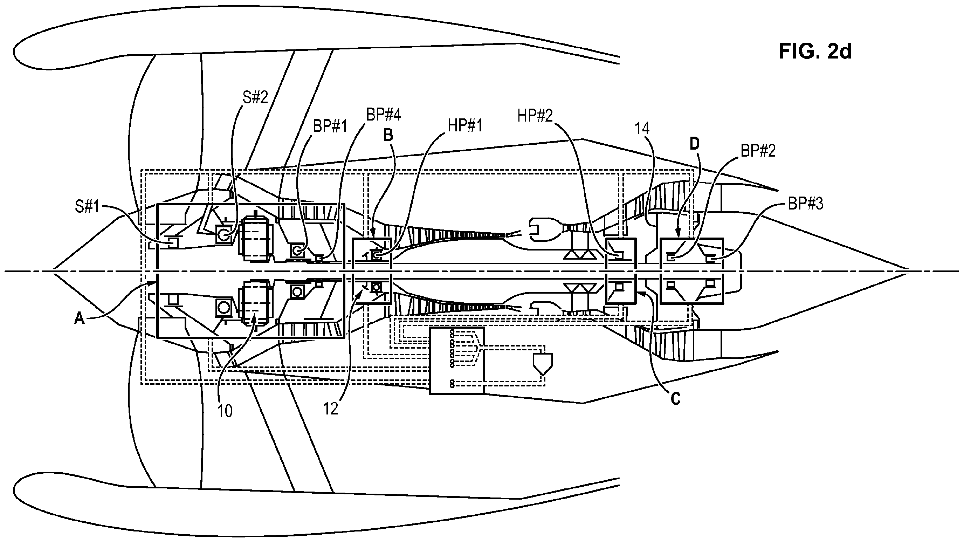

Les exemples de réalisation illustrés en figure 2d à 2f sont identiques à ceux illustrés en figures 2a à 2c respectivement, excepté que le palier basse pression BP#4 est supporté par le carter d'entrée (tout comme le palier basse pression BP#1), c'est-à-dire par le carter qui s'étend entre la soufflante 2 et le booster 3a. On notera que, quel que soit l'exemple de réalisation, le palier basse pression BP#4 et le palier haute pression avant HP#1 peuvent être logés soit dans une même enceinte B (comme illustré et décrit ci-dessus), soit dans des enceintes séparées (non visible sur les figures). Dans le cas d'enceintes séparées, soit une pompe de récupération est associée à chaque enceinte, soit une unique pompe de récupération est utilisée pour récupérer l'huile injectée dans les deux enceintes.

Dans l'exemple de réalisation illustré sur la figure 2a, le turboréacteur 1 comprend au plus quatre pompes de récupération 28a à 28d, chaque pompe de récupération 28a à 28d étant associée à au moins une enceinte A à D, à savoir :
- une enceinte A logeant les deux paliers de soufflante S#1 et S#2, le mécanisme de réduction 10 et les paliers basse pression BP#1 et BP#4.
- une enceinte B logeant le palier haute pression avant HP#1.
- une enceinte C logeant le palier haute pression arrière HP#2.
- une enceinte D logeant les paliers basse pression BP#2 et BP#3.

Cet exemple de réalisation est donc identique à celui illustré en figure 1b, excepté que le palier basse pression BP#4 est placé dans l'enceinte A plutôt que dans l'enceinte B.

Ici encore, le turboréacteur 1 pourrait comprendre exactement trois pompes de récupération, la pompe de récupération 28c étant alors configurée pour récupérer l'huile dans l'enceinte C qui loge le palier haute pression arrière HP#2 et dans l'enceinte D qui loge les paliers basse pression BP#2 et BP#3. Dans ce cas, la pompe de récupération 28d est supprimée.

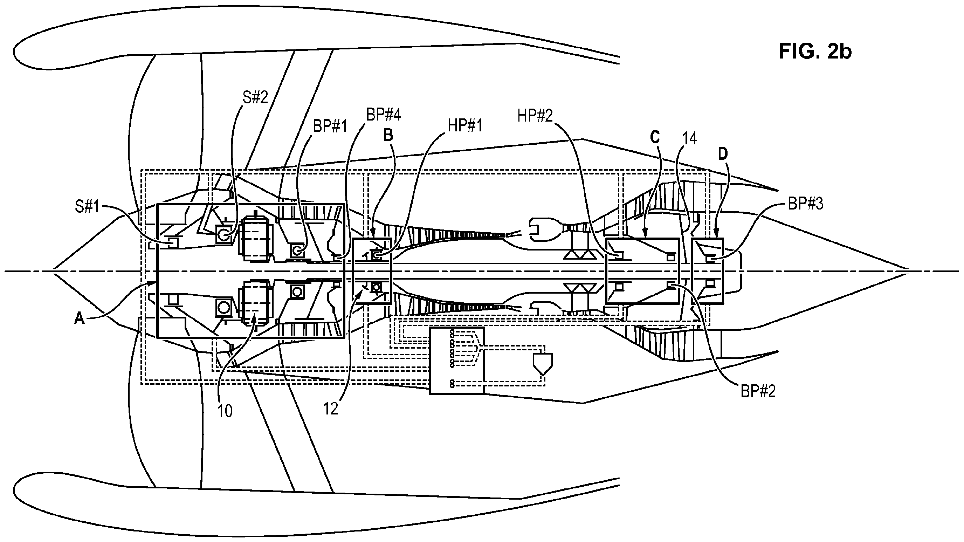

L'exemple de réalisation illustré en figure 2b est identique à celui illustré en figure 2a, excepté que le palier basse pression BP#2 est placé dans l'enceinte C. Comme pour la figure 2a, une même pompe de récupération 28c peut alors être utilisée pour récupérer l'huile dans les enceintes C et D, le turboréacteur 2 ne comprenant alors que trois pompes de récupération 28a à 28c.

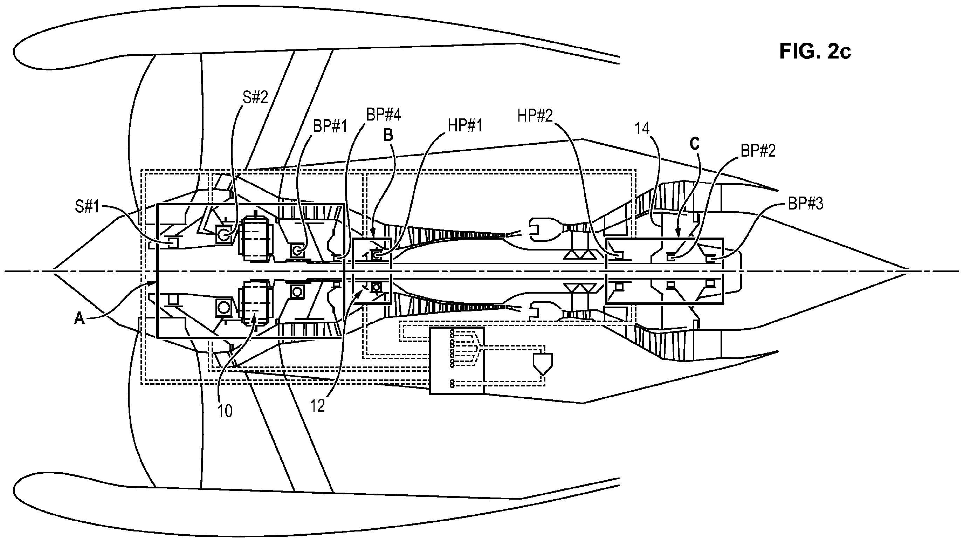

L'exemple de réalisation illustré en figure 2c est identique à celui illustré en figure 2a, excepté que le turboréacteur 1 ne comprend que les enceintes A, B et C, l'enceinte C logeant le palier haute pression arrière HP#2 et les paliers basse pression BP#2 et BP#3. Dans cet exemple de réalisation, le turboréacteur 1 comprend donc trois pompes de récupération 28a, 28b et 28c exactement, à savoir une pompe de récupération 28a à 28c par enceinte A à C (respectivement).

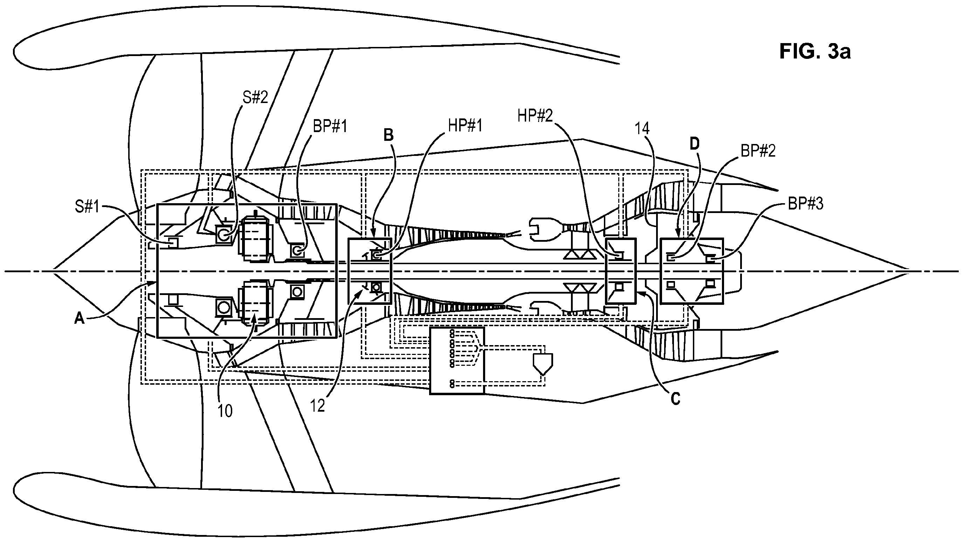

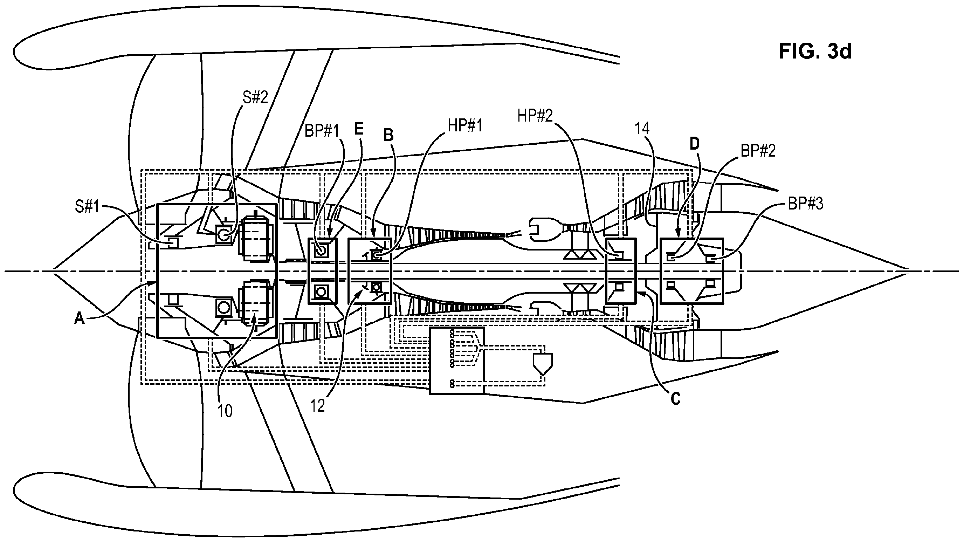

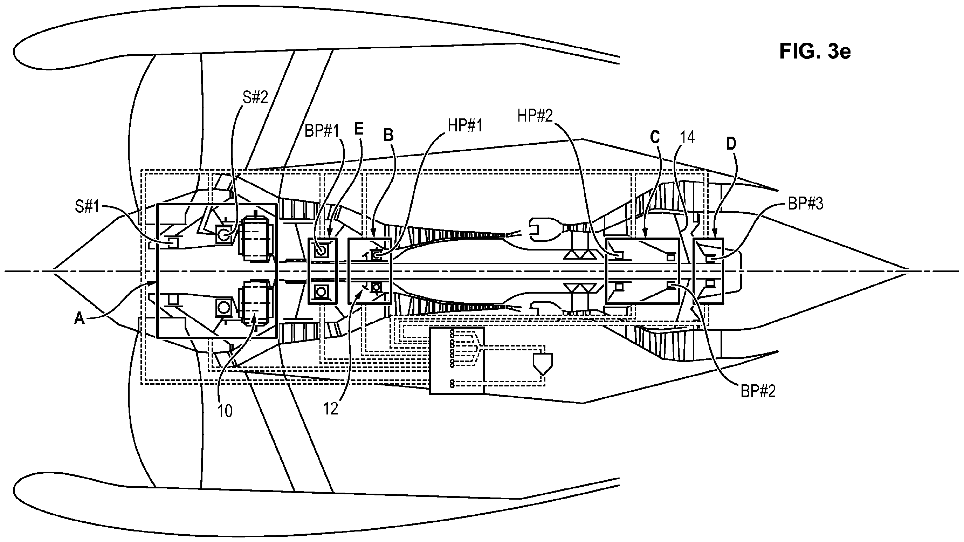

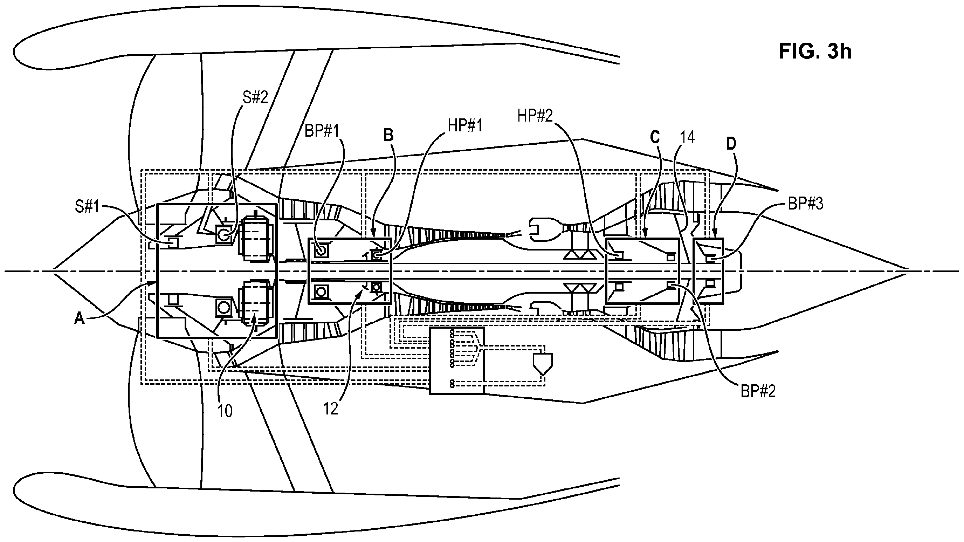

Les exemples de réalisation illustré en figure 3d à 3f sont identiques à ceux illustrés en figure 3a à 3c, respectivement, excepté que le palier basse pression BP#1 n'est pas placé dans l'enceinte A, mais dans une enceinte E distincte, en amont de l'enceinte B du palier avant haute pression HP#1.

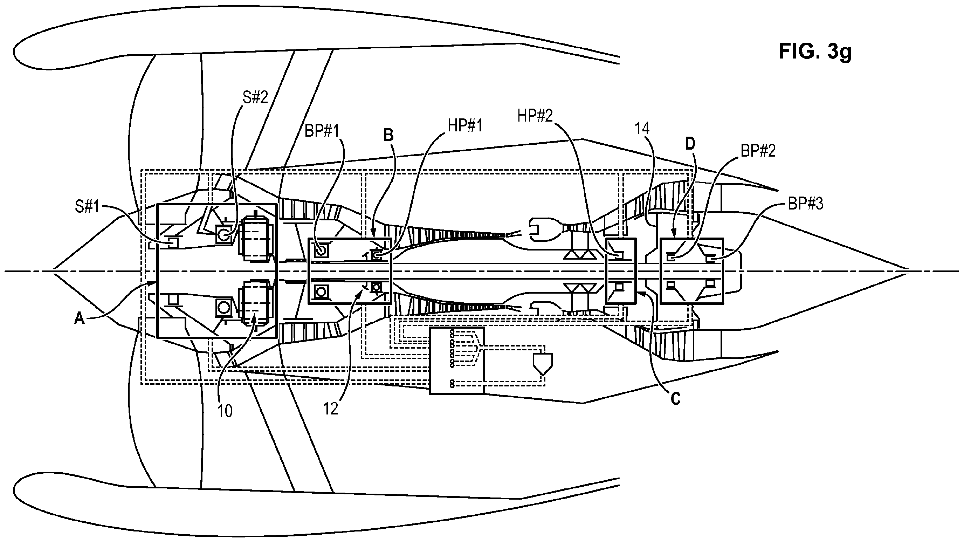

Les exemples de réalisation illustré en figure 3g à 3i sont identiques à ceux illustrés en figure 3a à 3c, respectivement, excepté que le palier basse pression BP#1 est cette fois placé dans la même enceinte B que le palier avant haute pression HP#1, et non plus dans l'enceinte avant A ni dans une enceinte dédiée.

Dans un exemple de réalisation non illustré sur les figures, le turboréacteur 1 comprend cinq enceintes. Une première enceinte A loge les deux paliers de soufflante S#1 et S#2, le mécanisme de réduction 10, le palier basse pression BP#1 et le quatrième palier basse pression BP#4. Une deuxième enceinte B loge le palier haute pression avant HP#1. Une troisième, une quatrième et une cinquième enceinte logent respectivement le palier haute pression arrière HP#2, le deuxième palier basse pression BP#2 et le troisième palier basse pression BP#3. Dans ce cas, le turboréacteur 1 comprend au plus cinq pompes de récupération (à savoir au plus une pompe par enceinte). Ainsi, le turboréacteur 1 peut comprendre une pompe de récupération pour la première enceinte, une pompe de récupération pour la deuxième enceinte, et entre une et trois pompes de récupération pour la troisième, la quatrième et la cinquième enceinte.

Dans les exemples de réalisation illustrés sur les figures 3a à 3c, le turboréacteur 1 comprend deux paliers de soufflante S#1 et S#2, un mécanisme de réduction 10, deux paliers haute pression HP#1 et HP#2 et trois paliers basse pression BP#1, BP#2 et BP#3.

Dans l'exemple de réalisation illustré sur la figure 3a, le turboréacteur 1 comprend au plus quatre pompes de récupération 28a à 28d, chaque pompe de récupération 28a à 28d étant associée à au moins une enceinte A à D, à savoir quatre enceintes A à D :
- une enceinte A logeant les deux paliers de soufflante S#1 et S#2, le mécanisme de réduction 10 et le palier basse pression BP#1,
- une enceinte B logeant le palier haute pression avant HP#1.
- une enceinte C logeant le palier haute pression arrière HP#2.
- une enceinte D logeant les paliers basse pression BP#2 et BP#3.

Ici encore, le turboréacteur 1 pourrait comprendre exactement trois pompes de récupération, la pompe de récupération 28c étant alors configurée pour récupérer l'huile dans l'enceinte C qui loge le palier haute pression arrière HP#2 et dans l'enceinte D qui loge les paliers basse pression BP#2 et BP#3. Dans ce cas, la pompe de récupération 28d est supprimée.

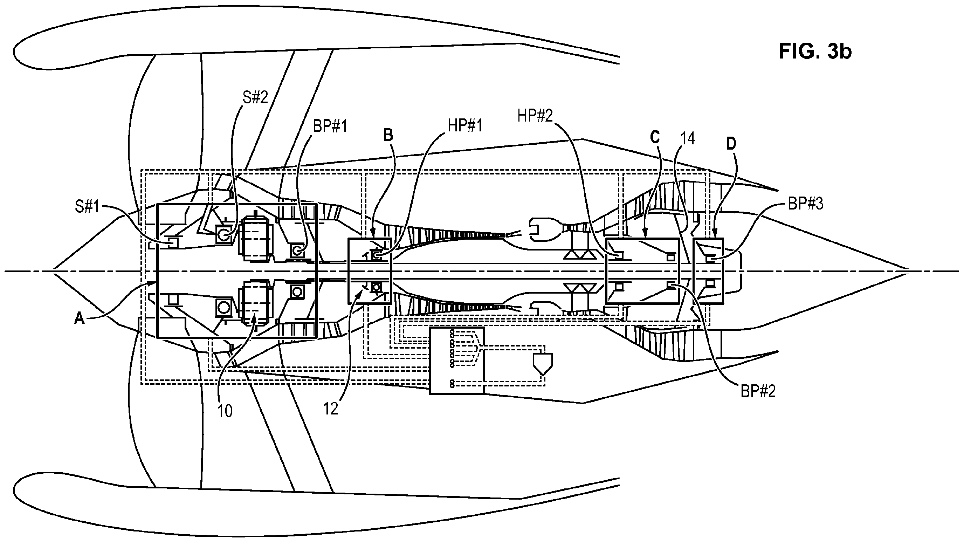

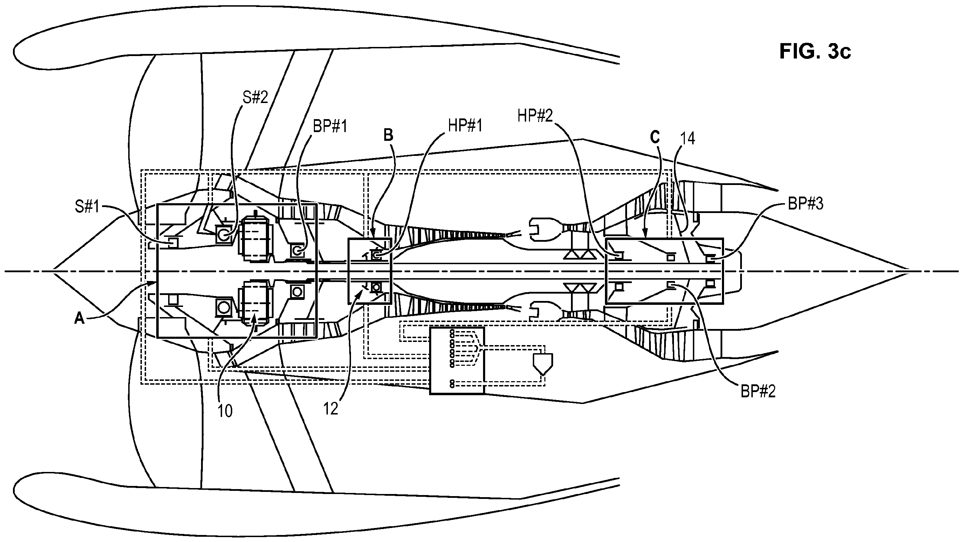

L'exemple de réalisation illustré en figure 3b est identique à celui illustré en figure 1a, excepté que le palier basse pression BP#2 est placé dans l'enceinte C. Comme pour la figure 3a, une même pompe de récupération 28c peut alors être utilisée pour récupérer l'huile dans les enceintes C et D, le turboréacteur 1 ne comprenant alors que trois pompes de récupération 28a à 28c.L'exemple de réalisation illustré en figure 3c est identique à celui illustré en figure 3a, excepté que le turboréacteur 1 ne comprend que les enceintes A, B et C, l'enceinte C logeant le palier haute pression arrière HP#2 et les paliers basse pression BP#2 et BP#3. Dans cet exemple de réalisation, le turboréacteur 1 comprend donc trois pompes de récupération 28a, 28b et 28c exactement, à savoir une pompe de récupération 28a à 28c par enceinte A à C (respectivement).

Dans un exemple de réalisation non illustré sur les figures, le turboréacteur 1 comprend cinq enceintes. Une première enceinte A loge les deux paliers de soufflante S#1 et S#2, le mécanisme de réduction 10 et le palier basse pression BP#1. Une deuxième enceinte B loge le palier haute pression avant HP#1. Une troisième, une quatrième et une cinquième enceinte logent respectivement le palier haute pression arrière HP#2, le deuxième palier basse pression BP#2 et le troisième palier basse pression BP#3. Dans ce cas, le turboréacteur 1 comprend au plus cinq pompes de récupération (à savoir au plus une pompe par enceinte). Ainsi, le turboréacteur 1 peut comprendre une pompe de récupération pour la première enceinte, une pompe de récupération pour la deuxième enceinte, et entre une et trois pompes de récupération pour la troisième, la quatrième et la cinquième enceinte.

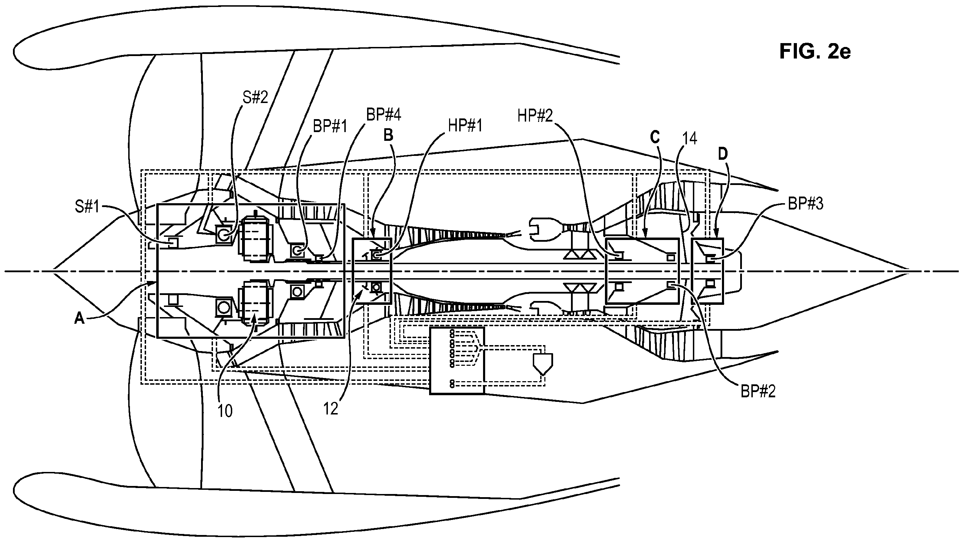

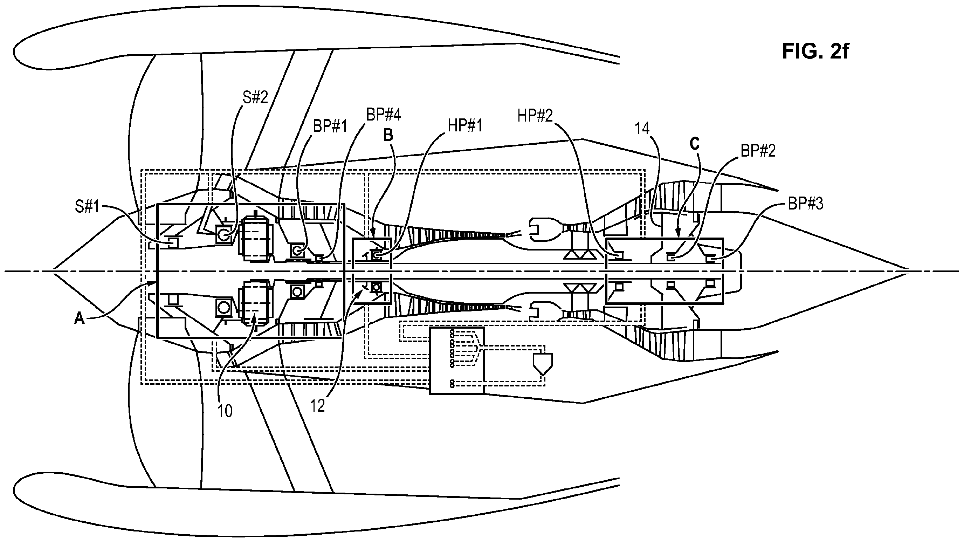

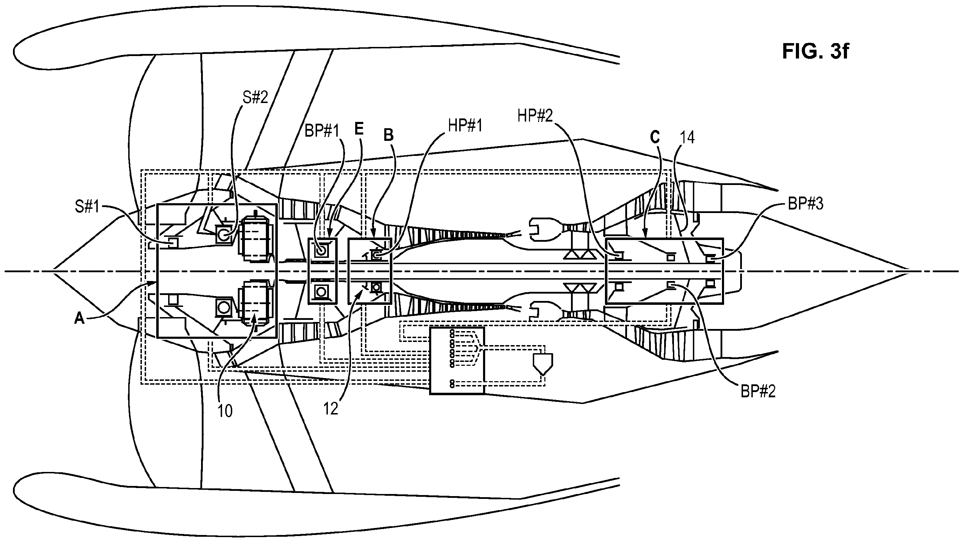

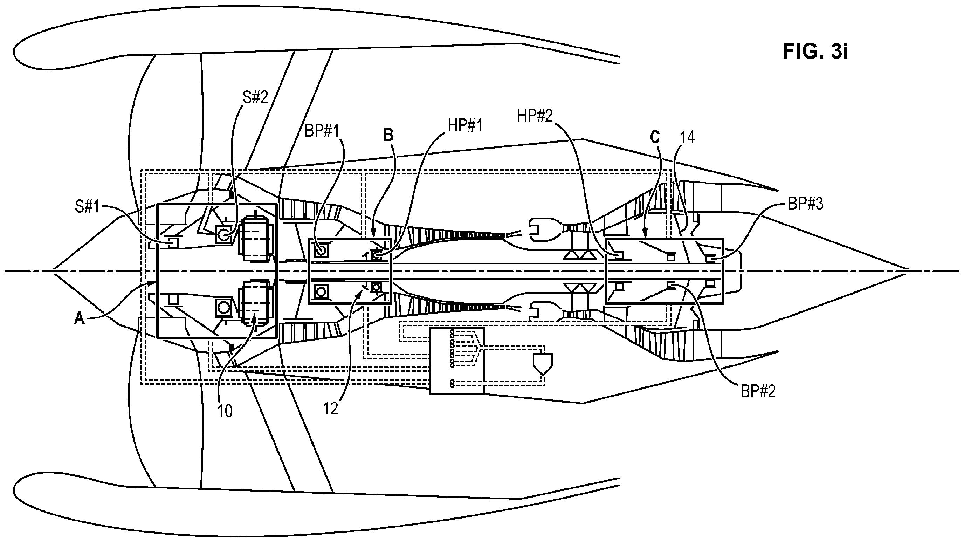

On notera que, de manière générale, lorsque le deuxième et le troisième palier basse pression BP#2 et BP#3 sont logés dans une même enceinte (comme illustré par exemple sur la figure 1a, mais également dans les modes de réalisation des figures 2a, 2d, 3a, 3d et 3g), le deuxième palier BP#2 est de préférence fixé sur le carter d'échappement. Par ailleurs, lorsque le deuxième palier basse pression BP#2 et le palier arrière haute pression HP#2 sont logés dans une même enceinte (comme illustré par exemple sur les figures 1b, 2b, 2e 3b, 3e et 3h), le deuxième palier BP#2 est de préférence fixé sur le carter inter-turbines. En revanche, lorsque le deuxième palier basse pression BP#2, le troisième palier basse pression BP#3 et le palier arrière HP#2 de l'arbre haute pression sont logés dans une même enceinte ou dans trois enceintes distinctes, le deuxième palier BP#2 peut être fixé soit sur le carter d'échappement (comme illustré sur les figures 1c, 2c, 2f) soit sur le carter inter-turbines (comme illustré sur les figure 3c, 3f et 3i).

Optionnellement, l'arbre basse pression est en outre relié à la turbine basse pression par une liaison 14. Cette liaison est de préférence fixée entre deux enceintes et de sorte à ne pas croiser la liaison entre un palier (par exemple BP#2) et l'arbre basse pression. Ainsi, dans le cas des figures 1a, 2a, 2d, 3a, 3d et 3g où le deuxième palier basse pression BP#2 est logé dans la même enceinte que le troisième palier basse pression BP#3, la liaison 14 s'étend entre le palier arrière haute pression HP#2 et le deuxième palier basse pression BP#2 ; tandis que dans le cas des figures 1b, 2b, 2e, 3b, 3e et 3h où le deuxième palier basse pression BP#2 est logé dans la même enceinte que le palier arrière haute pression HP#2, la liaison 14 s'étend entre le deuxième palier basse pression BP#2 et le troisième palier basse pression BP#3.

De manière optionnelle, quelle que soit la forme de réalisation, l'enceinte qui loge le palier avant HP#1 peut également loger l'engrenage 12 configuré pour prélever la puissance sur l'arbre haute pression. Cette configuration permet ainsi de mutualiser la pompe de récupération du palier avant HP#1 et de l'engrenage en question.

Par ailleurs, quelle que soit la forme de réalisation, le turboréacteur 1 ne comprend pas de deuxième palier basse pression BP#2 ou de troisième palier basse pression BP#3. Dans ce cas, le palier arrière haute pression HP#2 et le palier restant (troisième palier basse pression BP#3 ou deuxième palier basse pression BP#2) sont soit logés dans des enceintes distinctes, soit dans une même enceinte. Le nombre de pompes de récupération associé au palier arrière haute pression HP#2 et au palier restant (BP#3 ou BP#2) est alors égal à un ou deux.

Lorsque l'arbre haute pression 7a n'est supporté que par un seul palier avant HP#1, le palier HP#1 comprend de préférence un palier à billes. En variante, l'arbre haute pression 7a peut en outre comprendre un troisième palier haute pression (non visible sur les figures), placé entre le palier avant HP#1 et le palier arrière HP#2. Le troisième palier haute pression est de préférence placé au voisinage du palier avant HP#1. Dans ce cas, quel que soit l'exemple de réalisation (dont ceux illustrés en Figures 1a à 3i), le troisième palier haute pression est logé dans l'enceinte B, avec le palier haute pression avant HP#1.

De manière optionnelle, le deuxième palier BP#2 peut être supprimé.

Les enceintes A à D peuvent être ventilées ou non ventilées.

Par enceinte non ventilée (« non vented » en anglais), on comprendra ici une enceinte qui n'est pas directement en communication fluidique avec l'air libre et qui ne comprend pas de tube de dégazage. A cet effet, une pompe de récupération d'huile connectée à un port de récupération, peut être placée au point bas du moteur afin de récupérer l'huile et l'air de l'enceinte non ventilée et créer ainsi une aspiration d'air à travers les joints de l'enceinte. La pompe a avantageusement un débit de pompage supérieur à celui de l'arrivée d'huile dans l'enceinte permettant la lubrification du ou des palier(s) et le cas échéant du mécanisme de réduction 10. Dans ce cas, il est préférable d'avoir un flux d'air à travers les deux joints d'étanchéité amont et aval, afin de retenir l'huile au niveau des deux joints. De plus, pour qu'il y ait des flux d'air traversant les deux joints de l'enceinte huile, il est préférable que la pression en amont des deux joints soit sensiblement égale afin d'éviter la formation d'un chemin préférentiel du flux d'air qui compromettrait la performance d'étanchéité de l'un des joints.

Par enceinte ventilée (« vented » en anglais), on comprendra ici une enceinte susceptible d'être en communication avec l'air libre tout en étant maintenue à une pression proche de la pression atmosphérique. Les paliers à l'intérieur de telles enceintes sont baignés par un brouillard d'huile qui est extrait de l'enceinte en continu par un tube de dégazage, l'air et l'huile étant ensuite séparés dans un déshuileur. Dans une telle enceinte, la pompe de récupération a un débit de pompage sensiblement égal à celui de l'arrivée d'huile dans l'enceinte (via les gicleurs). Par ailleurs, il est possible d'avoir des flux d'air passant à travers les étanchéités amont et aval de l'enceinte, lesdits flux d'air ayant une pression supérieure ou égale à celle régnant dans l'enceinte.

Dans une forme de réalisation, lorsque l'enceinte comprend au plus deux étanchéités, l'enceinte est de préférence non ventilée. De même, lorsque l'enceinte comprend plus de deux étanchéités, l'enceinte est de préférence ventilée.

Typiquement, quel que soit le mode de réalisation, l'enceinte A est de préférence ventilée dans la mesure où elle comprend systématiquement une première étanchéité correspondant à l'interface entre le rotor de la soufflante 2 et le carter de soufflante 2 (l'enceinte A logeant les paliers de soufflante S#1 et S#2), une deuxième interface entre l'arbre de soufflante 7 et l'arbre basse pression 6 (l'enceinte A logeant le mécanisme de réduction 10) et une troisième interface entre l'arbre basse pression 6 et le carter inter-compresseurs (l'enceinte A logeant le palier basse pression BP#1). Cette enceinte A comprend donc nécessairement une pompe de récupération dédiée.

Dans le cas où les paliers arrière HP#2, BP#2 et BP#3 sont chacun logés dans une enceinte respective, lesdites enceintes peuvent être non ventilées. Par ailleurs, pour ces enceintes et comme décrit en référence aux figures ci-dessus, les pompes de récupération peuvent (optionnellement) être mutualisées, c'est-à-dire que le groupe de lubrification comprend au plus trois pompes de récupération pour récupérer l'huile dans ces trois enceintes, de préférence exactement deux pompes de récupération, voire une unique pompe de récupération.

En revanche, dans les exemples de réalisation illustrés en figures 1c, 2c, 2f, 3c, 3f et 3i les paliers arrière HP#2, BP#2 et BP#3 sont tous les trois logés dans une même enceinte C, qui est donc de préférence ventilée. Dans ce cas, une pompe de récupération est associée à cette enceinte C.

Lorsque le palier avant haute pression HP#1 est seul dans son enceinte B (ou uniquement associé à l'engrenage 12), l'enceinte B peut être non ventilée. Lorsque son enceinte comprend en outre l'engrenage 12, l'enceinte peut être ventilée ou non ventilée. La pompe de récupération associée à cette enceinte non ventilée peut alors être mutualisée avec une autre enceinte non ventilée.

De même, lorsque le palier arrière haute pression HP#2 est seul dans son enceinte, l'enceinte peut être non ventilée. La pompe de récupération associée à cette enceinte non ventilée peut alors être mutualisée avec une autre enceinte non ventilée.

Lorsque le palier arrière haute pression HP#2 est logé dans la même enceinte que le deuxième palier basse pression BP#2 (mais dans une enceinte différente du troisième palier basse pression BP#3), ladite enceinte peut être ventilée ou non ventilée.

Le palier de soufflante S#1 peut être du type palier à rouleaux et comprendre une bague interne et une bague externe coaxiales entre lesquelles sont montés des rouleaux. Par ailleurs, le palier de soufflante S#2 peut être du type palier à billes et comprendre une bague interne et une bague externe coaxiales entre lesquelles sont montées des billes.

A titre de comparaison, dans l'art antérieur, le palier avant de soufflante et le palier arrière de soufflante comprennent chacun un palier à rouleau conique, qui sont assimilables dynamiquement à un unique palier. Par opposition, la mise en œuvre d'un palier à rouleaux et d'un palier à billes pour le palier avant de soufflante S#1 et le palier arrière de soufflante S#2 respectivement permet ainsi d'avoir deux « vrais » paliers, permettant ainsi d'avoir un guidage en rotation plus précis.

Le palier basse pression BP#1 peut être du type palier à billes et comprendre une bague interne et une bague externe coaxiales entre lesquelles sont montées des billes.

Les paliers basse pression BP#2, BP#3 et le cas échéant BP#4 peuvent être du type palier à rouleaux.

Enfin, les paliers haute pression avant HP#1 et arrière HP#2 peuvent être du type palier à rouleaux.

## Revendications

1. Turboréacteur (1) à double flux comprenant :
- un arbre basse pression (6) supporté par au moins deux paliers basse pression (BP#1 à BP#4),
- un arbre haute pression (8) supporté par au moins deux paliers haute pression (HP#1, HP#2),
- un arbre de soufflante (7) supporté par au moins deux paliers de soufflante (S#1, S#2),
- un mécanisme de réduction (10), couplant l'arbre basse pression (6) et l'arbre de soufflante (7),
- des enceintes (A à D) logeant les paliers basse pression (BP#1 à BP#4), les paliers haute pression (HP#1, HP#2), les paliers de soufflante (S#1, S#2) et le mécanisme de réduction (10), et
- un groupe de lubrification (20) comprenant un circuit d'huile fermé configuré pour alimenter les enceintes (A à E) en huile afin de refroidir lesdits paliers et le mécanisme de réduction, ledit groupe de lubrification (20) comprenant au plus cinq pompes de récupération (28a à 28d) configurées pour récupérer l'huile dans les enceintes (A à D),
le turboréacteur (1) étant **caractérisé en ce que** les paliers haute pression (HP#1, HP#2) comprennent deux paliers haute pression avant (HP#1), placés en amont d'une chambre de combustion, et un palier haute pression arrière (HP#2), placé en aval de la chambre de combustion, les paliers haute pression avant (HP#1) étant logés dans une même enceinte (B) et associés à une même pompe de récupération (28b).

2. Turboréacteur (1) selon la revendication 1, comprenant au plus quatre pompes de récupération (28a à 28d) configurées pour récupérer l'huile dans les enceintes (A à E).

3. Turboréacteur (1) selon l'une des revendications 1 ou 2, ledit turboréacteur comprenant au plus autant de pompes de récupération (28a à 28d) que d'enceintes (A à E), chaque pompe de récupération (28a à 28d) étant associée à au plus une enceinte (A à E) respective.

4. Turboréacteur (1) selon l'une des revendications 1 à 3, dans lequel les paliers de soufflante (S#1, S#2), le mécanisme de réduction (10) et au moins un des paliers basse pression (BP#1, BP#4) sont logés dans une même enceinte (A), et dans lequel une unique pompe de récupération (28a) est configurée pour récupérer l'huile injectée dans ladite enceinte (A).

5. Turboréacteur (1) selon l'une des revendications 1 à 4, dans lequel les autres paliers basse pression (BP#1 à BP#4), les paliers haute pression (HP#1, HP#2) et les paliers de soufflante (S#1, S#2) sont logés dans au plus quatre enceintes (A à E), et dans lequel le groupe de lubrification (20) comprend exactement trois ou quatre pompes de récupération (28b à 28d) configurées pour récupérer l'huile injectée dans lesdites quatre enceintes (B à E).

6. Turboréacteur (1) selon l'une des revendications 1 à 5, dans lequel les paliers basse pression (BP#1 à BP#4) comprennent un premier, un deuxième et un troisième palier basse pression (BP#1, BP#2 et BP#3), et dans lequel l'enceinte (C) du palier haute pression arrière, l'enceinte (C, D) du troisième palier basse pression et l'enceinte (D) du quatrième palier basse pression sont non ventilées.

7. Turboréacteur (1) selon l'une des revendications 1 à 6, dans lequel les paliers basse pression (BP#1 à BP#4) comprennent exactement trois ou quatre paliers basse pression, dont un ou deux paliers basse pression (BP#1, BP#4) placés en amont d'une chambre de combustion, et un ou deux paliers basse pression (BP#2, BP#3) placés en aval de la chambre de combustion.

8. Turboréacteur (1) selon l'une des revendications 1 à 7, présentant un taux de dilution supérieur ou égal à 10, de préférence supérieur ou égal à 18, par exemple entre 12 et 18.

9. Turboréacteur (1) selon l'une des revendications 1 à 8, dans lequel le mécanisme de réduction (10) comprend un mécanisme de réduction épicycloïdal ou planétaire présentant un rapport de réduction compris entre 2.6 et 5.

## Patentansprüche

1. Zweistrom-Turbotriebwerk (1), umfassend:
- eine Niederdruckwelle (6), die durch mindestens zwei Niederdrucklager (BP#1 bis BP#4) gestützt wird,
- eine Hochdruckwelle (8), die durch mindestens zwei Hochdrucklager (HP#1, HP#2) gestützt wird,
- eine Gebläsewelle (7), die durch mindestens zwei Gebläselager (S#1, S#2) gestützt wird,
- einen Untersetzungsmechanismus (10), der die Niederdruckwelle (6) und die Gebläsewelle (7) koppelt,
- Gehäuse (A bis D), die die Niederdrucklager (BP#1 bis BP#4), die Hochdrucklager (HP#1, HP#2), die Gebläselager (S#1, S#2) und den Untersetzungsmechanismus (10) aufnehmen, und
- eine Schmierungsanordnung (20), die einen geschlossenen Ölkreislauf umfasst, der konfiguriert ist, um die Gehäuse (A bis E) mit Öl zu versorgen, um die Lager und den Untersetzungsmechanismus zu kühlen, wobei die Schmierungsanordnung (20) höchstens fünf Absaugpumpen (28a bis 28d) umfasst, die konfiguriert sind, um das Öl in den Gehäusen (A bis D) abzusaugen,
wobei das Turbotriebwerk (1) **dadurch gekennzeichnet ist, dass** die Hochdrucklager (HP#1, HP#2) zwei vordere Hochdrucklager (HP#1), die stromaufwärts einer Brennkammer platziert sind, und ein hinteres Hochdrucklager (HP#2) umfassen, die stromabwärts der Brennkammer platziert ist, wobei die vorderen Hochdrucklager (HP#1) in einem selben Gehäuse (B) aufgenommen, und einer selben Absaugpumpe (28b) zugeordnet sind.

2. Turbotriebwerk (1) nach Anspruch 1, höchstens vier Absaugpumpen (28a bis 28d) umfassend, die konfiguriert sind, um das Öl in den Gehäusen (A bis E) abzusaugen.

3. Turbotriebwerk (1) nach einem der Ansprüche 1 oder 2, wobei das Turbotriebwerk höchstens so viele Absaugpumpen (28a bis 28d) wie Gehäuse (A bis E) umfasst, wobei jede Absaugpumpe (28a bis 28d) mindestens einem entsprechenden Gehäuse (A bis E) zugeordnet ist.

4. Turbotriebwerk (1) nach einem der Ansprüche 1 bis 3, wobei die Gebläselager (S#1, S#2), der Untersetzungsmechanismus (10) und mindestens eines der Niederdrucklager (BP#1, BP#4) in einem selben Gehäuse (A) aufgenommen sind, und wobei eine einzige Absaugpumpe (28a) konfiguriert ist, um das in das Gehäuse (A) eingespritzte Öl abzusaugen.

5. Turbotriebwerk (1) nach einem der Ansprüche 1 bis 4, wobei die anderen Niederdrucklager (BP#1 bis BP#4), die Hochdrucklager (HP#1, HP#2) und die Gebläselager (S#1, S#2) in höchstens vier Gehäusen (A bis E) aufgenommen sind, und wobei die Schmierungsanordnung (20) genau drei oder vier Absaugpumpen (28b bis 28d) umfasst, die konfiguriert sind, um das in die vier Gehäuse (B bis E) eingespritzte Öl abzusaugen.

6. Turbotriebwerk (1) nach einem der Ansprüche 1 bis 5, wobei die Niederdrucklager (BP#1 bis BP#4) ein erstes, ein zweites und ein drittes Niederdrucklager (BP#1, BP#2 und BP#3) umfassen, und wobei das Gehäuse (C) des hinteren Hochdrucklagers, das Gehäuse (C, D) des dritten Niederdrucklagers und das Gehäuse (D) des vierten Niederdrucklagers nicht belüftet sind.

7. Turbotriebwerk (1) nach einem der Ansprüche 1 bis 5, wobei die Niederdrucklager (BP#1 bis BP#4) genau drei oder vier Niederdrucklager umfassen, von denen ein oder zwei Niederdrucklager (BP#1, BP#4) stromaufwärts einer Brennkammer platziert sind, und ein oder zwei Niederdrucklager (BP#2, BP#3) stromabwärts der Brennkammer platziert sind.

8. Turbotriebwerk (1) nach einem der Ansprüche 1 bis 6, das ein Verdünnungsverhältnis größer oder gleich 10, vorzugsweise größer oder gleich 18, beispielsweise zwischen 12 und 18 aufweist.

9. Turbotriebwerk (1) nach einem der Ansprüche 1 bis 7, wobei der Untersetzungsmechanismus (10) einen epizyklischen oder Planetenuntersetzungsmechanismus umfasst, der ein Untersetzungsverhältnis aufweist, das zwischen 2,6 und 5 enthalten ist.

## Claims

1. Bypass turbofan engine (1) comprising:
- a low-pressure shaft (6) supported by at least two low-pressure bearings (BP#1 to BP#4),
- a high-pressure shaft (8) supported by at least two high-pressure bearings (HP#1, HP#2),
- a fan shaft (7) supported by at least two fan bearings (S#1, S#2),
- a reduction mechanism (10), coupling the low-pressure shaft (6) and the fan shaft (7),
- enclosures (A to D) housing the low-pressure bearings (BP#1 to BP#4), the high-pressure bearings (HP#1, HP#2), the fan bearings (S#1, S#2) and the reduction mechanism (10), and
- a lubrication assembly (20) comprising a closed oil circuit configured to supply the enclosures (A to E) with oil to cool said bearings and the reduction mechanism, said lubrication assembly (20) comprising at most five recovery pumps (28a to 28d) configured to recover oil in the enclosures (A to D),
the turbofan engine (1) being **characterised in that** the high-pressure bearings (HP#1, HP#2) comprise two front high-pressure bearings (HP#1), placed upstream of a combustion chamber, and a rear high-pressure bearing (HP#2), placed downstream of the combustion chamber, the front high-pressure bearings (HP#1) being housed in the same enclosure (B) and associated with the same recovery pump (28b).

2. Turbofan engine (1) according to claim 1, comprising at most four recovery pumps (28a to 28d) configured to recover oil in the enclosures (A to E).

3. Turbofan engine (1) according to one of claims 1 or 2, said turbofan engine comprising at most as many recovery pumps (28a to 28d) as enclosures (A to E), each recovery pump (28a to 28d) being associated with at most one respective enclosure (A to E).

4. Turbofan engine (1) according to one of claims 1 to 3, wherein the fan bearings (S#1, S#2), the reduction mechanism (10) and at least one of the low-pressure bearings (BP#1, BP#4) are housed in the same enclosure (A), and wherein a single recovery pump (28a) is configured to recover oil injected into said enclosure (A).

5. Turbofan engine (1) according to one of claims 1 to 4, wherein the other low-pressure bearings (BP#1 to BP#4), the high-pressure bearings (HP#1, HP#2) and the fan bearings (S#1, S#2) are housed in at most four enclosures (A to E), and wherein the lubrication assembly (20) comprises exactly three or four recovery pumps (28b to 28d) configured to recover oil injected into said four enclosures (B to E)

6. The turbofan (1) according to any one of claims 1 to 5, wherein the low-pressure bearings (BP#1 to BP#4) comprise a first, a second and a third low-pressure bearing (BP#1, BP#2 and BP#3), and wherein the enclosure (C) of the rear high-pressure bearing, the enclosure (C, D) of the third low-pressure bearing and the enclosure (D) of the fourth low-pressure bearing are non-vented.

7. Turbofan engine according to one of claims 1 to 5, wherein the low-pressure bearings (BP#1 to BP#4) comprise exactly three or four low-pressure bearings, including one or two low-pressure bearings (BP#1, BP#4) placed upstream of a combustion chamber, and one or two low-pressure bearings (BP#2, BP#3) placed downstream of the combustion chamber.

8. Turbofan engine (1) according to one of claims 1 to 6, having a bypass ratio greater than or equal to 10, preferably greater than or equal to 18, such as between 12 and 18.

9. Turbofan engine (1) according to one of claims 1 to 7, wherein the reduction mechanism (10) comprises an epicyclic or planetary gear reduction mechanism having a reduction ratio between 2.6 and 5.
